# FASCICULE DE BREVET EUROPEEN

(11) **EP 3 706 078 B1**
(45) Date de publication et mention de la délivrance du brevet: **24.12.2025**
(21) Numéro de dépôt: 20158970.2
(22) Date de dépôt: 24.02.2020
(51) Int. Cl.: G06T 7/73

(54) **PROCÉDÉ D'INTERDÉSIGNATION DE CIBLES ENTRE UNE PREMIÈRE PLATEFORME ET AU MOINS UNE AUTRE PLATEFORME ET DISPOSITIF DE POINTAGE ET DÉSIGNATION METTANT EN OEUVRE UN TEL PROCÉDÉ**
VERFAHREN DER GEGENSEITIGEN BESTIMMUNG VON ZIELEN ZWISCHEN EINER ERSTEN PLATTFORM UND MINDESTENS EINER ANDEREN PLATTFORM, UND ZIELGERÄT UND BESTIMMUNG ZUR UMSETZUNG DIESES VERFAHRENS
METHOD FOR INTER-DESIGNATION OF TARGETS BETWEEN A FIRST PLATFORM AND AT LEAST ONE OTHER PLATFORM AND DESIGNATING AND POINTING DEVICE IMPLEMENTING SUCH A METHOD

(30) Priorité: 04.03.2019 FR 1902082
(43) Date de publication de la demande: 09.09.2020
(73) Titulaire: KNDS France, 78034 Versailles Cedex (FR)
(72) Inventeur: BRUNEAU, Philippe, 18023 Bourges (FR)
(74) Mandataire: Cabinet Chaillot

(56) Documents cités:
- WO-A2-2007/086874
- US-A1- 2002 175 994
- US-A1- 2009 078 817
- SAJAD SAEEDI ET AL: "Multiple-Robot Simultaneous Localization and Mapping: A Review : Multiple-Robot Simultaneous Localization and Mapping", JOURNAL OF FIELD ROBOTICS, vol. 33, no. 1, 1 January 2016 (2016-01-01), US, pages 3 - 46, XP055493323, ISSN: 1556-4959, DOI: 10.1002/rob.21620
- CHUNG SOON-JO ET AL: "A Survey on Aerial Swarm Robotics", IEEE TRANSACTIONS ON ROBOTICS, IEEE SERVICE CENTER, PISCATAWAY, NJ, US, vol. 34, no. 4, 1 August 2018 (2018-08-01), pages 837 - 855, XP011688857, ISSN: 1552-3098, [retrieved on 20180814], DOI: 10.1109/TRO.2018.2857475
- DUMOND DANIELLE ET AL: "Coordinating with Humans by Adjustable-Autonomy for Multirobot Pursuit (CHAMP)", UNMANNED SYSTEMS TECHNOLOGY XIV, SPIE, 1000 20TH ST. BELLINGHAM WA 98225-6705 USA, vol. 8387, no. 1, 11 May 2012 (2012-05-11), pages 1 - 15, XP060003643, DOI: 10.1117/12.920451
- KIRILL KRINKIN ET AL: "Modern Multi-Agent SLAM Approaches Survey", PROCEEDINGS OF THE XXTH CONFERENCE OF OPEN INNOVATIONS ASSOCIATION FRUCT, 1 April 2017 (2017-04-01), pages 617 - 623, XP055634729, Retrieved from the Internet <URL:https://fruct.org/publications/abstract20/files/Kri.pdf>
- ADRIAN BOEING ET AL: "Cooperative multi-robot navigation and mapping of unknown terrain", ROBOTICS, AUTOMATION AND MECHATRONICS (RAM), 2011 IEEE CONFERENCE ON, IEEE, 17 September 2011 (2011-09-17), pages 234 - 238, XP031974467, ISBN: 978-1-61284-252-3, DOI: 10.1109/RAMECH.2011.6070488

## Description

Le domaine technique de l'invention est celui des procédés et dispositifs permettant l'interdésignation de cibles, en particulier sur le champ de bataille.

Il est connu de doter les véhicules de moyens de pointage et de désignation comprenant par exemple des viseurs panoramiques.

Le brevet FR2712993 décrit un tel type de viseur panoramique incorporant un télémètre laser (désignateur de cible). Un viseur / désignateur est solidaire d'un véhicule et il permet de déterminer les coordonnées d'une cible : angles de site et gisement et distance, dans un repère géométrique lié au véhicule.

Il se pose aujourd'hui la question du combat collaboratif dans lequel les coordonnées d'une cible doivent pouvoir être échangées entre plusieurs véhicules susceptibles d'engager ladite cible.

Il est donc nécessaire de connaître les coordonnées de la cible dans un repère absolu, par exemple le repère terrestre, pour que chaque véhicule puisse se localiser par rapport à la cible.

Pour cela il est connu d'équiper les véhicules de moyens de positionnement par satellite (GPS). Ces moyens permettent de localiser et orienter un repère véhicule par rapport à un repère terrestre fixe et donc de convertir les coordonnées de cible fournies par le viseur désignateur (qui sont définies dans un repère lié au véhicule considéré) en coordonnées dans un repère absolu, donc utilisables par tous les autres véhicules.

Cependant les moyens de positionnement GPS sont susceptibles d'être brouillés sur le champ de bataille, donc de ne pas pouvoir être utilisés.

Il est également connu d'utiliser des plateformes inertielles pour positionner un véhicule dans un repère absolu. Mais ces équipements sont coûteux et fragiles, et ils peuvent présenter des variations de référence d'une plateforme à l'autre.

Nous pouvons également citer la Publication de Dumond Danielle et Al. « Coordinating with Humans by Adjustable-Autonomy for Multirobot Pursuit (CHAMP) » (Coordination avec les humains par autonomie ajustable pour la poursuite multirobot (CHAMP)), Proc. SPIE 8387, Unmanned Systems Technology XIV, 838703 (15 May 2012); https://doi.org/10.1117/12.920451, qui décrit un système logiciel permettant à un opérateur humain de se coordonner avec un groupe de plateformes robotiques dans une tâche de recherche et de poursuite.

C'est le but de l'invention que de fournir un procédé permettant l'interdésignation de cibles entre véhicules d'une façon simple, fiable et robuste, sans mise en œuvre de systèmes de positionnement par satellites.

Ainsi l'invention a pour objet un procédé d'interdésignation de cibles entre une première plateforme et au moins une autre plateforme, procédé dans lequel au moins une plateforme comporte un viseur panoramique pivotant autour d'un axe de pointage, viseur doté d'une fonction de désignateur de cible, et comporte également un moyen caméra couplé à un moyen de calcul associé à des moyens de communication, moyen caméra assurant une observation de l'espace avec une couverture angulaire de sensiblement 360° autour de la plateforme, procédé dans lequel on définit un premier repère d'orientation du moyen caméra de la première plateforme dans l'espace, dit premier repère de visée plateforme, procédé dans lequel :
- on observe une autre plateforme à l'aide du moyen caméra ;
- on compare la géométrie de l'autre plateforme ainsi observée, qui a été incorporée dans un modèle numérique instantané de cette plateforme obtenu à partir de l'image observée, à un modèle numérique en trois dimensions de cette plateforme, qui a été mis dans une mémoire du moyen de calcul, pour en déduire la pose, c'est à dire l'orientation et la localisation du premier repère de visée par rapport à un autre repère d'orientation associé à l'autre plateforme ;
- on transmet à une deuxième plateforme la pose du premier repère d'orientation du moyen caméra par rapport à l'autre repère ainsi que la distance entre la cible et le moyen caméra de la première plateforme ou bien uniquement les coordonnées de la cible dans le repère d'orientation de l'autre plateforme.

Selon un mode particulier de mise en œuvre, il y a au moins deux plateformes en intervisibilité, une première plateforme ayant un premier repère d'orientation de son moyen caméra et une deuxième plateforme ayant un deuxième repère plateforme et :
- la première plateforme calcule la pose de son premier repère d'orientation du moyen caméra dans le deuxième repère plateforme ;
- la première plateforme transmet à la deuxième plateforme et par les moyens de communication la pose ainsi calculée ainsi que la distance entre la cible et le moyen caméra de la première plateforme ou bien uniquement les coordonnées de la cible dans le repère d'orientation de la deuxième plateforme.

Selon un autre mode particulier de mise en œuvre, il y a au moins trois plateformes en intervisibilité au moins deux à deux et :
- on choisit parmi les plateformes une plateforme dite de référence qui est positionnée sur le terrain dans le champ de vision des moyens caméra d'au moins deux autres plateformes ;
- on observe la plateforme de référence à l'aide des moyens caméras des autres plateformes ;
- on compare la géométrie de la plateforme de référence ainsi observée à un modèle numérique de cette plateforme, qui a été mis dans une mémoire du moyen de calcul de chaque autre plateforme, pour en déduire au niveau de chaque plateforme la pose, c'est à dire l'orientation et la localisation d'un repère d'orientation du moyen caméra associé à la plateforme qui observe, par rapport à un repère maître associé à la plateforme de référence ;
- la première plateforme transmet à la deuxième plateforme et par les moyens de communication la pose du premier repère d'orientation du moyen caméra de la première plateforme dans le repère maître ainsi que la distance entre la cible et le moyen caméra de la première plateforme ou bien uniquement les coordonnées de la cible dans le repère maître.

Selon un mode de réalisation préféré, le moyen caméra est solidaire d'une platine qui est liée rigidement en gisement au viseur panoramique, le pointage en gisement du viseur entraînant donc le suivi de ce pointage par le moyen caméra, le moyen caméra étant lui-même monté pivotant en site par rapport à la platine, le pivotement en site étant commandé par une motorisation qui assure une recopie automatique du pointage en site du viseur, la cible observée par le moyen caméra étant la cible désignée par le viseur panoramique et la distance entre la cible et le moyen caméra étant fournie par le moyen de calcul à partir des informations de désignation données par le viseur panoramique.

Avantageusement, la première plateforme transmet à la deuxième plateforme et par les moyens de communication la pose de son premier repère d'orientation du moyen caméra dans le repère d'orientation de la deuxième plateforme ou dans le repère maître ainsi que la distance entre la cible et le moyen caméra de la première plateforme.

L'invention a également pour objet un dispositif de pointage et désignation d'une cible par une première plateforme, dispositif comprenant des moyens adaptés pour la mise en œuvre du procédé selon l'invention et caractérisé en ce qu'il comporte :
- un viseur panoramique pivotant autour d'un axe de pointage en gisement, viseur doté d'une fonction de désignateur de cible,
- un moyen caméra couplé à un moyen de calcul associé à des moyens de communication, moyen caméra assurant par ailleurs une observation de l'espace avec une couverture angulaire de sensiblement 360° autour de la plateforme ;
- le moyen de calcul incorporant une mémoire dans laquelle est mis en place un modèle numérique d'au moins une autre plateforme qui est positionnée sur le terrain dans le champ de vision du moyen caméra de la première plateforme ;
- le moyen de calcul incorporant des algorithmes adaptés pour déterminer la pose c'est-à-dire l'orientation et la localisation, par rapport à un repère associé à l'autre plateforme, d'un premier repère d'orientation du moyen caméra de la première plateforme dans l'espace, dit premier repère de visée plateforme ;
- les moyens de communication adaptés pour transmettre à une deuxième plateforme la pose du premier repère d'orientation du moyen caméra par rapport à l'autre repère ainsi que la distance entre la cible et le moyen caméra de la première plateforme, ou bien uniquement les coordonnées de la cible dans le repère d'orientation de l'autre plateforme.

Selon un mode particulier de réalisation, une deuxième plateforme constitue l'autre plateforme, la pose du premier repère d'orientation du moyen caméra étant déterminée dans le repère d'orientation de la deuxième plateforme avant d'être transmises à la deuxième plateforme.

Selon un autre mode particulier de réalisation, l'autre plateforme est une plateforme de référence qui se trouve en intervisibilité à la fois avec la première plateforme et avec une deuxième plateforme, la pose du premier repère d'orientation du moyen caméra étant déterminée dans un repère maître associé à la plateforme de référence avant d'être transmise à la deuxième plateforme.

Selon une variante de réalisation, le modèle numérique d'au moins une autre plateforme positionnée sur le terrain est un modèle articulé associant les modèles numériques d'au moins deux sous-ensembles de l'autre plateforme, chaque sous-ensemble pouvant être orienté dans l'espace par rapport à l'autre sous-ensemble, l'orientation relative des différents sous-ensembles étant transmise à la plateforme par l'autre plateforme.

Selon un mode de réalisation préféré de l'invention, le moyen caméra est solidaire d'une platine qui est liée rigidement en gisement au viseur panoramique, le pointage en gisement du viseur entraînant donc le suivi de ce pointage par le moyen caméra, le moyen caméra étant lui-même monté pivotant en site par rapport à la platine, le pivotement en site étant commandé par une motorisation qui assure une recopie automatique du pointage en site du viseur, le viseur étant couplé au moyen de calcul.

Avantageusement, la première plateforme transmet à la deuxième plateforme et par les moyens de communication la pose de son premier repère d'orientation du moyen caméra dans le repère d'orientation de la deuxième plateforme ou dans le repère maître ainsi que la distance entre la cible et le moyen caméra de la première plateforme.

L'invention sera mieux comprise à la lecture de la description qui va suivre, description faite en référence aux dessins annexés et dans lesquels :
[Fig. 1] montre de façon schématique deux plateformes équipées de dispositifs selon l'invention et engageant une cible ;
[Fig. 2] représente en vue latérale un véhicule blindé équipé d'un dispositif de pointage et désignation selon l'invention ;
[Fig. 3] est une vue agrandie et en perspective d'un dispositif de pointage et désignation selon l'invention ;
[Fig. 4] montre de façon schématique trois plateformes engageant une cible.

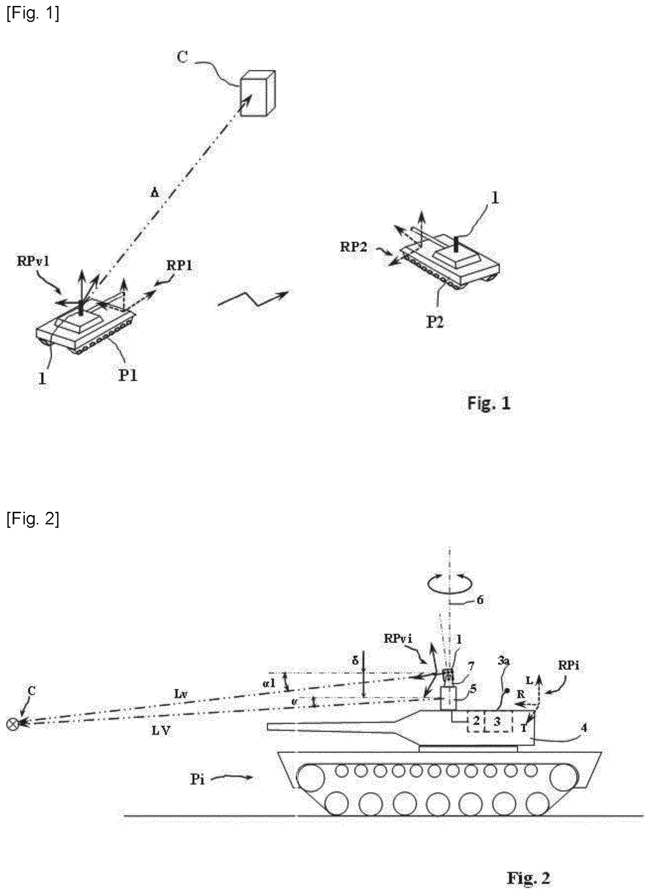

En se reportant à la figure 1, on a représenté un théâtre d'opération dans lequel deux plateformes P1 et P2, ici des chars, sont disposées à distance l'une de l'autre et en intervisibilité. On désignera par la suite par Pi une plateforme quelconque présente sur le terrain sans distinction particulière.

Une cible C est placée à distance des plateformes P1 et P2. Chaque plateforme Pi qui est présente sur le terrain comporte un moyen caméra 1 qui est couplé à un moyen de calcul et qui est associé à des moyens de communication.

On a représenté ainsi sur la figure 2 une plateforme Pi de type char dont la tourelle 4 porte un moyen caméra 1, relié à des moyens de calcul 2, couplés aux moyens de communication radio 3, dont on a représenté schématiquement une antenne 3a. Ces moyens de calcul et de communication sont schématiquement figurés par des blocs logés dans la tourelle 4. Les moyens de calcul 2 pourront être incorporés dans le calculateur de la conduite de tir de la plateforme Pi. Les moyens de communication 3 pourront être constitués par les moyens de liaison radio existant dans la plateforme Pi et permettant les échanges entre les différentes plateformes Pi présentes sur le terrain.

Suivant le mode de réalisation qui est représenté à la figure 2, la plateforme Pi comporte un viseur panoramique 5 qui est pivotant en gisement sur 360° autour d'un axe de pointage en gisement 6.

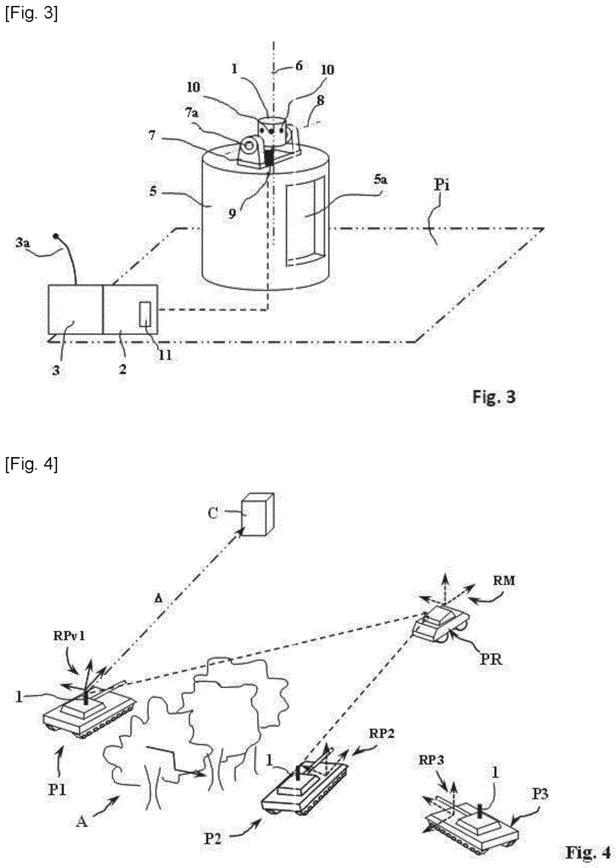

Ce viseur panoramique 5 est également orientable en site (le plus souvent par basculement d'un miroir 5a - figure 3), et il permet de déplacer dans l'espace une ligne de visée LV (figure 2). Le viseur panoramique 5 est également doté d'une fonction de désignateur de cible et il permet d'une façon classique d'acquérir les coordonnées d'une cible C dans un repère RPi lié au véhicule.

On a représenté à la figure 2 le repère RPi avec ses axes de Roulis (R), de tangage (T) et de lacet (L). D'une façon conventionnelle, l'axe de roulis R correspond, à la direction d'avance horizontale de la plateforme Pi, l'axe de lacet L est la verticale à l'axe de roulis et l'axe de tangage est perpendiculaire aux deux autres axes.

La conduite de tir de la plateforme Pi est capable de déterminer de façon permanente les coordonnées d'orientation dans le repère RPi d'une ligne de visée LV associée au viseur panoramique 5, la distance Δ de la cible C à la plateforme Pi sur cette ligne de visée est par ailleurs mesurée par la fonction de désignateur de cible laser du viseur panoramique 5.

Comme on le voit sur les figures 2 et 3, un moyen caméra 1 est solidaire d'une platine 7 qui est liée rigidement en gisement au viseur panoramique 5. Ainsi tout pointage en gisement du viseur 5 entraîne également un pointage en gisement identique du moyen caméra 1.

Le moyen caméra 1 est par ailleurs lui-même monté pivotant en site par rapport à la platine 7. Pour cela le moyen caméra 1 est solidaire d'axes montés dans des tourillons 7a de la platine 7. L'axe de pointage en site du moyen caméra 1 est repéré 8 sur la figure 3. Le pivotement en site du moyen caméra 1 est commandé par une motorisation 9 qui assure une recopie automatique du pointage en site du viseur panoramique 5.

Il suffit pour réaliser un telle recopie d'utiliser les commandes de pointage en site du miroir 5a du viseur 5 pour commander le pointage en site du moyen caméra 1.

Plus précisément la recopie de l'angle de pointage en site est corrigée en tenant compte d'un angle de simbleautage entre le moyen caméra 1 et le viseur 5. Il est en effet nécessaire (figure 2), pour la précision de la détermination de la position de la cible C, que la ligne de visée Lv du moyen caméra 1 converge avec la ligne de visée LV du viseur 5 sur la cible C. Cette correction de simbleautage est classique et elle est effectuée en tenant compte de la distance Δ mesurée par le télémètre du viseur panoramique 5 et en tenant compte de la distance δ entre les caméras 10 du moyen caméra 1 et l'axe de pivot du miroir 5a du viseur 5.

Ainsi lorsque l'angle de pointage en site du viseur 5 est égal à α, l'angle de pointage en site du moyen caméra est égal à α1 avec α1=α+δ/Δ. Δ étant la distance du viseur 5 à la cible telle que télémétrée par le viseur 5 et δ étant la distance (vue précédemment) entre les caméras 10 du moyen caméra 1 et l'axe de pivot du miroir 5a du viseur 5. Cet écart entre α et α1 est minime lorsque la distance de la plateforme à la cible est supérieure à une centaine de mètres.

Comme on le voit sur les figures 2 et 3, le moyen caméra 1 comprend une pluralités de caméras individuelles 10 régulièrement réparties angulairement autour de l'axe de pointage en gisement 6. Ces caméras 10 sont conformées de façon à assurer une observation de l'espace autour de la plateforme Pi avec une couverture angulaire de sensiblement 360° autour de l'axe de pointage en gisement 6.

On pourra choisir des caméras 10 à grand champ (donc à objectif grand angle) mais on pourra aussi choisir des caméras ayant un angle d'objectif plus réduit, il faut alors augmenter le nombre de caméras pour assurer la couverture angulaire souhaitée (360°).

Pour des raisons technologiques, cette couverture de 360° pourra n'être effective qu'à une distance donnée de la plateforme Pi (par exemple d'au moins cinq mètres). Il pourra donc exister des zones aveugles mais uniquement à proximité de la plateforme Pi, les champs des caméras se recoupant à distance pour assurer la couverture de 360°.

Concrètement les champs sont choisis suffisamment larges pour qu'une caméra 10 assure toujours l'observation d'au moins une partie d'une autre plateforme Pj disposée à distance de la plateforme Pi considérée.

Ainsi la plateforme Pi est capable de viser et télémétrer une cible C. Elle peut ainsi calculer les coordonnées de la cible dans le repère RPi lié à la plateforme.

En se reportant à la figure 1, on voit que la première plateforme P1, qui vise et télémètre la cible C, peut aussi observer une deuxième plateforme P2 qui est en intervisibilité avec elle.

Selon une caractéristique de l'invention, on compare la géométrie de la plateforme P2 ainsi observée à un modèle numérique de cette plateforme, qui a été mis dans une mémoire 11 du moyen de calcul 2 (figure 3).

Des algorithmes appropriés, également mis en mémoire, permettent de transformer en temps réel les images de la plateforme P2 en un modèle numérique instantané de cette plateforme. Le modèle numérique de la plateforme qui est en mémoire est issu de la conception assistée par ordinateur (ou CAO) de la plateforme. C'est un modèle en trois dimensions qui n'est expurgé que des données de la plateforme qui ne sont pas visibles (formes cachées). Alternativement, en particulier si la CAO n'est pas disponible, il est possible d'utiliser un modèle numérique obtenu par une numérisation en trois dimensions de la plateforme.

Ce modèle numérique incorpore bien sûr les éléments dimensionnels du véhicule réel, ce qui permettra de déterminer une distance entre la plateforme P1 et la plateforme P2 à partir de l'image d'un véhicule d'une taille donnée.

On procède donc à une comparaison de la géométrie de la plateforme P2 observée (modèle numérique instantané) avec le modèle de référence qui a été mis dans une mémoire 11 du moyen de calcul 2.

Cette comparaison permet, à l'aide d'algorithmes de comparaison, d'en déduire tout à la fois l'orientation des axes d'un repère de visée RPv1 par rapport au repère de la seconde plateforme RP2 (angles des axes du repère RPv1 dans le repère RP2) et la localisation du premier repère de visée RPv1 par rapport au repère RP2 (position du centre du premier repère RPv1 dans le repère RP2). Le repère de visée RPv1 est un repère solidaire du moyen caméra 1 et dont l'axe de roulis est confondu avec la ligne de visée Lv du moyen caméra 1. Il diffère donc sensiblement du repère RP1 lié à la première plateforme (dont l'axe de roulis est suivant l'axe longitudinal du véhicule) et il a une pose (position et localisation) par rapport au repère RP2 qui dépend du pointage de cible qui est effectué par le viseur 5 portant le moyen caméra 1.

Afin de tenir compte des orientations relatives des composantes de la plateforme P2 sur le terrain (par exemple la tourelle par rapport au châssis), on pourra réaliser au niveau du moyen de calcul 2 un calcul dynamique tenant compte des orientations relatives de ces composants en associant, au moment de la mesure, les modèles numériques respectifs du châssis, de la tourelle et du canon avec les orientations réelles connues de ces éléments. Le modèle numérique de la plateforme P2 est alors un modèle articulé associant les modèles numériques d'au moins deux sous-ensembles de cette plateforme qui peuvent être orientés dans l'espace les uns par rapport aux autres.

La plateforme P1 calculera alors le modèle numérique global instantané de la plateforme P2 au moment du calcul de la pose du repère de visée RPv1. Cette variante permet de mettre en œuvre un modèle numérique plus complet correspondant à la forme réelle de la plateforme P2 sur le terrain et donne donc une meilleure précision sur le calcul de la pose.

Cette variante imposera cependant que la plateforme P2 transmette au préalable, sur demande de la plateforme P1, les orientations relatives de ses principaux éléments constitutifs (châssis, tourelle, canon). Les orientations seront bien entendu fournies dans le repère de la plateforme P2 qui sert ici de plateforme de référence.

La comparaison des géométries de plateformes met en œuvre des algorithmes de comparaison d'image connus sous le nom d'algorithmes SLAM, acronyme de la dénomination anglo saxonne : **S**imultaneous **L**ocalization **A**nd **M**apping (localisation et cartographie automatique). Ces algorithmes sont bien connus de l'Homme du Métier et il n'est pas nécessaire de les décrire en détails. On notera qu'ils procèdent à des comparaisons d'images en mettant en œuvre de techniques de filtrage (filtrage de Kalman, filtrage probalistique) afin de déterminer les modifications d'orientation des axes nécessaires pour obtenir la meilleure corrélation. Il est ainsi possible à tout moment de déterminer les coordonnées du premier repère de visée RPv1 dans le repère de la seconde plateforme RP2 et il est aussi possible de connaître les orientations des axes du premier repère de visée RPv1 par rapport aux axes du repère de la seconde plateforme RP2.

On peut alors transmettre à la deuxième plateforme P2 la pose du premier moyen caméra 1 dans le repère de la seconde plateforme RP2, c'est-à-dire tout à la fois la localisation du centre du repère de visée RPv1 et les positions des axes du repère RPv1. Ces informations de pose donnent directement l'orientation de la ligne de visée Lv dans le repère de la seconde plateforme, ce qui avec la transmission de la distance Δ entre le premier moyen caméra 1 et la cible C, permet de connaître les coordonnées de la cible C dans le repère de la seconde plateforme RP2, permettant ainsi à cette dernière de pointer directement la cible en question.

Il n'est donc pas nécessaire de passer par un calcul préliminaire des coordonnées de cible dans le repère de la première plateforme RP1.

Il serait bien entendu possible de prévoir un moyen caméra 1 qui serait fixé de façon rigide par rapport à la première plateforme P1 et qui ne serait donc pas orienté vers la cible comme le viseur panoramique 5.

Dans ce cas les moyens de calcul 2 détermineraient (de façon classique) les coordonnées de la cible C dans le premier repère véhicule RP1.

Et par ailleurs ils détermineraient à l'aide des algorithmes de comparaison d'images la pose (orientation et localisation) du repère RP1 par rapport au repère RP2 et calculeraient ensuite les coordonnées de la cible C dans le repère RP2 avant de transmettre ces coordonnées à la deuxième plateforme P2. Dans cette variante, le repère de visée de la plateforme RPvi est confondu avec le repère de la plateforme RPi puisque ce repère est fixe par rapport à la plateforme Pi et il ne varie pas pendant le pointage d'une cible.

On pourra au choix convertir au niveau du calculateur de la plateforme P1 les coordonnées de la cible dans le repère de la plateforme destinataire RP2 avant de les lui transmettre.

On pourra également transmettre à la plateforme P2 les coordonnées de la cible dans le repère de la plateforme P1 ainsi que les informations de pose du repère RP1 dans le repère RP2. C'est alors le calculateur de la plateforme P2 qui réalisera le calcul de changement de repère.

Enfin, lorsque plusieurs plateformes s'appuient sur une plateforme de référence PR qu'elles peuvent observer, la plateforme P1 pourra calculer les coordonnées de la cible dans le repère maître RM associé à la plateforme de référence PR avant de les transmettre à la plateforme destinataire P2.

Dans tous les cas, le mode de calcul selon cette variante de l'invention est plus lourd que celui de la variante décrite précédemment.

Il permet par contre de mettre en œuvre un moyen caméra 1 qui est plus simple et moins coûteux car il reste fixe par rapport à la première plateforme P1 au lieu de suivre les pointages du viseur panoramique 5.

Le procédé selon l'invention peut être mise en œuvre entre un nombre de plateformes Pi supérieur à 2. Ce qui est essentiel c'est qu'au moins deux plateformes qui échangent des coordonnées de cibles puissent être en intervisibilité avec au moins une autre plateforme qui va servir de référence de positionnement de leurs repères respectifs.

Ainsi la figure 4 montre un théâtre d'opérations dans lequel les plateformes P1 et P2 sont masquées l'une à l'autre par un bouquet d'arbres A. Ces deux plateformes P1 et P2 peuvent observer une plateforme de référence PR qui est ici un véhicule léger de commandement et non un char.

Comme précédemment chaque plateforme P1, P2 observe la plateforme de référence PR à l'aide de ses propres moyens caméra.

Chaque plateforme P1 et P2 peut comparer la géométrie de la plateforme de référence PR ainsi observée à un modèle numérique de cette plateforme, qui a été mis dans une mémoire de son moyen de calcul 2.

Les algorithmes précédemment décrits permettront de calculer, au niveau de chaque plateforme, la pose, c'est à dire l'orientation et la localisation d'un repère d'orientation RPvi du moyen caméra 1 associé à la plateforme Pi qui observe, par rapport au repère maître RM associé à la plateforme de référence PR.

Suivant le cas :
- si le moyen caméra 1 est un moyen fixe par rapport à la plateforme considérée, il permettra la localisation du repère (RP1 ou RP2) lié à la plateforme P1 ou P2 par rapport au repère maître RM ;
- si le moyen caméra 1 est solidaire d'un viseur panoramique, il permettra la localisation d'un repère d'orientation du moyen caméra considéré (RPv1 ou RPv2) par rapport au repère maître RM.

Dans l'exemple représenté, c'est la première plateforme P1 qui repère et désigne la cible C. Elle transmet à la deuxième plateforme P2 par ses moyens de communication 3 la pose de son premier repère d'orientation RPv1 de son moyen caméra 1, calculée dans le repère maître RM, et elle transmet aussi la distance Δ entre la cible C et son moyen caméra 1.

La deuxième plateforme P2 qui voit la plateforme de référence PR peut calculer sa propre orientation par rapport au repère maître RM et peut en déduire la localisation de la cible C par rapport à son propre repère RP2.

La deuxième plateforme P2 peut donc engager la cible C avec son propre système d'arme.

Il est ainsi possible de proche en proche de transmettre des coordonnées de cible C à des plateformes Pi qui ne sont pas directement en intervisibilité. Il suffit que les plateformes aient au moins une plateforme commune visible.

Ainsi la plateforme P3 sur la figure 4 peut recevoir directement de la plateforme P1 les coordonnées de la cible car elle voit aussi la plateforme de référence PR.

Alternativement la plateforme P3 pourrait recevoir les coordonnées de la cible C transmises par la plateforme P2 avec laquelle elle est en intervisibilité.

Lorsque différentes géométries de plateformes sont présentes sur le terrain et pour éviter toute erreur on pourra préciser dans les messages de transmission quel est le type de plateforme considéré, par exemple avec une référence univoque associée au véhicule ami qui est choisi comme plateforme de référence.

On notera par ailleurs qu'il n'est pas nécessaire que la plateforme de référence PR soit elle-même dotée de moyens caméra ou même d'un viseur panoramique. Il suffit que cette plateforme de référence ait sa géométrie mémorisée dans les calculateurs des plateformes ayant à acquérir des cibles et à échanger des informations sur ces dernières.

La plateforme de référence joue ainsi le rôle d'un Amer positionné sur le terrain, mais un Amer dont la position n'est pas fixe et peut varier au fil du temps. La fonction de cet Amer est de servir à un instant donné de référence de positionnement relatif entre deux autres plateformes ayant à échanger des coordonnées de cible.

On simplifie ainsi la conduite des opérations et on évite d'avoir recours à des moyens de positionnement par satellite ou à des plateformes inertielles.

Il est là encore possible de tenir compte des orientations relatives des composants de la plateforme PR sur le terrain (par exemple la tourelle par rapport au châssis). Le modèle numérique de la plateforme PR pourra donc être un modèle articulé associant les modèles numériques d'au moins deux sous-ensembles de cette plateforme qui peuvent être orientés dans l'espace les uns par rapport aux autres.

Chaque plateforme Pi calculera alors le modèle numérique global instantané de la plateforme PR au moment du calcul de la pose du repère de visée RPv1. C'est la plateforme PR qui transmettra au préalable, sur demande des différentes plateformes Pi présentes sur le terrain, les orientations relatives de ses principaux éléments constitutifs (châssis, tourelle, canon) dans le repère de référence PR.

## Revendications

1. Procédé d'interdésignation de cibles entre une première plateforme (P1) et au moins une autre plateforme (Pi), procédé dans lequel au moins une plateforme comporte un viseur panoramique (5) pivotant autour d'un axe de pointage, viseur doté d'une fonction de désignateur de cible, et comporte également un moyen caméra (1) couplé à un moyen de calcul (2) associé à des moyens de communication (3), moyen caméra (1) assurant une observation de l'espace avec une couverture angulaire de sensiblement 360° autour de la plateforme (P1,Pi), procédé dans lequel on définit un premier repère (RPv1) d'orientation du moyen caméra (1) de la première plateforme (P1) dans l'espace, dit premier repère de visée plateforme (RPv1), procédé dans lequel :
- on observe une autre plateforme (Pi) à l'aide du moyen caméra (1) ;
- on compare la géométrie de l'autre plateforme (Pi) ainsi observée, qui a été incorporée dans un modèle numérique instantané de cette plateforme obtenu à partir de l'image observée, à un modèle numérique en trois dimensions de cette plateforme, qui a été mis dans une mémoire (11) du moyen de calcul (2), pour en déduire la pose, c'est à dire l'orientation et la localisation du premier repère de visée (RPv1) par rapport à un autre repère d'orientation associé à l'autre plateforme (RPi) ;
- on transmet à une deuxième plateforme (P2) la pose du premier repère (RPv1) d'orientation du moyen caméra (1) par rapport à l'autre repère (RPi) ainsi que la distance entre la cible et le moyen caméra (1) de la première plateforme (P1) ou bien uniquement les coordonnées de la cible dans le repère d'orientation (RPi) de l'autre plateforme (Pi).

2. Procédé d'interdésignation de cibles selon la revendication 1, procédé dans lequel, il y a au moins deux plateformes en intervisibilité, une première plateforme (P1) ayant un premier repère (RPv1) d'orientation de son moyen caméra (1) et une deuxième plateforme (P2) ayant un deuxième repère plateforme (RP2),
- la première plateforme (P1) calcule la pose de son premier repère (RPv1) d'orientation du moyen caméra (1) dans le deuxième repère plateforme (RP2) ;
- la première plateforme (P1) transmet à la deuxième plateforme (P2) et par les moyens de communication (3) la pose ainsi calculée ainsi que la distance entre la cible et le moyen caméra (1) de la première plateforme (P1) ou bien uniquement les coordonnées de la cible dans le repère d'orientation (RP2) de la deuxième plateforme (P2).

3. Procédé d'interdésignation de cibles selon la revendication 1, procédé dans lequel il y a au moins trois plateformes en intervisibilité au moins deux à deux, et dans lequel :
- on choisit parmi les plateformes une plateforme dite de référence (PR) qui est positionnée sur le terrain dans le champ de vision des moyens caméra (1) d'au moins deux autres plateformes (P1,P2) ;
- on observe la plateforme de référence (PR) à l'aide des moyens caméras (1) des autres plateformes (P1,P2) ;
- on compare la géométrie de la plateforme de référence (PR) ainsi observée à un modèle numérique de cette plateforme, qui a été mis dans une mémoire (11) du moyen de calcul (2) de chaque autre plateforme (P1,P2), pour en déduire au niveau de chaque plateforme (P1,P2) la pose, c'est à dire l'orientation et la localisation d'un repère d'orientation du moyen caméra associé à la plateforme qui observe (RPv1,RPv2), par rapport à un repère maître (RM) associé à la plateforme de référence (PR) ;
- la première plateforme (P1) transmet à la deuxième plateforme (P2) et par les moyens de communication (3) la pose du premier repère (RPv1) d'orientation du moyen caméra (1) de la première plateforme (P1) dans le repère maître (RM) ainsi que la distance entre la cible et le moyen caméra (1) de la première plateforme (P1) ou bien uniquement les coordonnées de la cible dans le repère maître (RM).

4. Procédé d'interdésignation de cibles selon une des revendications 1 à 3, procédé dans lequel le moyen caméra (1) est solidaire d'une platine (7) qui est liée rigidement en gisement au viseur panoramique (5), le pointage en gisement du viseur (5) entraînant donc le suivi de ce pointage par le moyen caméra (1), le moyen caméra (1) étant lui-même monté pivotant en site par rapport à la platine (7), le pivotement en site étant commandé par une motorisation (9) qui assure une recopie automatique du pointage en site du viseur (5), la cible observée par le moyen caméra (1) étant la cible désignée par le viseur panoramique (5) et la distance entre la cible et le moyen caméra (1) étant fournie par le moyen de calcul (2) à partir des informations de désignation données par le viseur panoramique (5).

5. Procédé d'interdésignation de cibles selon la revendication 4, procédé dans lequel la première plateforme (P1) transmet à la deuxième plateforme (P2) et par les moyens de communication (3) la pose de son premier repère (RPv1) d'orientation du moyen caméra (1) dans le repère d'orientation de la deuxième plateforme (RP2) ou dans le repère maître (RM) ainsi que la distance entre la cible et le moyen caméra (1) de la première plateforme (P1).

6. Dispositif de pointage et désignation d'une cible par une première plateforme (P1), dispositif comprenant des moyens adaptés pour la mise en œuvre du procédé selon une des revendications précédentes et ***caractérisé en ce qu***'il comporte :
- un viseur panoramique (5) pivotant autour d'un axe de pointage en gisement, viseur doté d'une fonction de désignateur de cible,
- un moyen caméra (1) couplé à un moyen de calcul (2) associé à des moyens de communication (3), moyen caméra (1) assurant par ailleurs une observation de l'espace avec une couverture angulaire de sensiblement 360° autour de la plateforme ;
- le moyen de calcul (2) incorporant une mémoire (11) dans laquelle est mis en place un modèle numérique d'au moins une autre plateforme (Pi) qui est positionnée sur le terrain dans le champ de vision du moyen caméra (1) de la première plateforme (P1) ;
- le moyen de calcul (2) incorporant des algorithmes adaptés pour déterminer la pose c'est-à-dire l'orientation et la localisation, par rapport à un repère (Ri) associé à l'autre plateforme (Pi), d'un premier repère (RPv1) d'orientation du moyen caméra (1) de la première plateforme (P1) dans l'espace, dit premier repère de visée plateforme (RPv1) ;
- les moyens de communication (3) adaptés pour transmettre à une deuxième plateforme (P2) la pose du premier repère (RPv1) d'orientation du moyen caméra (1) par rapport à l'autre repère (RPi) ainsi que la distance entre la cible et le moyen caméra de la première plateforme (P1), ou bien uniquement les coordonnées de la cible dans le repère d'orientation (RPi) de l'autre plateforme (Pi).

7. Dispositif de pointage et désignation d'une cible selon la revendication 6, **caractérisé en ce qu'**une deuxième plateforme (P2) constitue l'autre plateforme (Pi), la pose du premier repère (RPv1) d'orientation du moyen caméra (1) étant déterminée dans le repère d'orientation de la deuxième plateforme (RP2) avant d'être transmises à la deuxième plateforme (P2).

8. Dispositif de pointage et désignation d'une cible selon la revendication 6, **caractérisé en ce que** l'autre plateforme (Pi) est une plateforme de référence (PR) qui se trouve en intervisibilité à la fois avec la première plateforme (P1) et avec une deuxième plateforme (P2), la pose du premier repère (RPv1) d'orientation du moyen caméra (1) étant déterminée dans un repère maître (RM) associé à la plateforme de référence (PR) avant d'être transmise à la deuxième plateforme (P2).

9. Dispositif de pointage et désignation d'une cible selon une des revendications 6 à 8, **caractérisé en ce que** le modèle numérique d'au moins une autre plateforme (Pi) positionnée sur le terrain est un modèle articulé associant les modèles numériques d'au moins deux sous-ensembles de l'autre plateforme (Pi), chaque sous-ensemble pouvant être orienté dans l'espace par rapport à l'autre sous-ensemble, l'orientation relative des différents sous-ensembles étant transmise à la plateforme (P1) par l'autre plateforme (Pi).

10. Dispositif de pointage et désignation d'une cible selon une des revendications 6 à 9, **caractérisé en ce que** le moyen caméra (1) est solidaire d'une platine (7) qui est liée rigidement en gisement au viseur panoramique (5), le pointage en gisement du viseur (5) entraînant donc le suivi de ce pointage par le moyen caméra (1), le moyen caméra (1) étant lui-même monté pivotant en site par rapport à la platine (7), le pivotement en site étant commandé par une motorisation (9) qui assure une recopie automatique du pointage en site du viseur (5), le viseur (5) étant couplé au moyen de calcul (2).

11. Dispositif de pointage et désignation d'une cible selon la revendication 10, **caractérisé en ce que** la première plateforme (P1) transmet à la deuxième plateforme (P2) et par les moyens de communication la pose de son premier repère (RPv1) d'orientation du moyen caméra (1) dans le repère d'orientation de la deuxième plateforme (RP2) ou dans le repère maître (RM) ainsi que la distance entre la cible et le moyen caméra (1) de la première plateforme (P1).

## Patentansprüche

1. - Zielvermittlungsverfahren zwischen einer ersten Plattform (P1) und mindestens einer weiteren Plattform (Pi), wobei bei dem Verfahren mindestens eine Plattform einen Panoramasucher (5) aufweist, der um eine Zeigeachse schwenkbar ist, der Sucher mit einer Zielbezeichnungsfunktion ausgestattet ist und auch eine Kameraeinrichtung (1) umfasst, die mit einer Recheneinrichtung (2) gekoppelt ist, die mit Kommunikationseinrichtungen (3) verbunden ist, die Kameraeinrichtung (1) eine Beobachtung des Raums mit einer Winkelabdeckung von im Wesentlichen 360° um die Plattform (P1, Pi) herum gewährleistet, wobei bei dem Verfahren ein erstes Koordinatensystem (RPv1) für die Ausrichtung der Kameraeinrichtung (1) der ersten Plattform (P1) im Raum definiert wird, das als erstes Plattform-Zielmarkierung (RPv1) bezeichnet wird, wobei bei dem Verfahren
- eine andere Plattform (Pi) mittels der Kameraeinrichtung (1) beobachtet wird;
- die Geometrie der somit beobachteten anderen Plattform (Pi), die in ein momentanes digitales Modell dieser Plattform, das anhand des beobachteten Bilds erlangt wird, integriert wurde, mit einem dreidimensionalen digitalen Modell dieser Plattform verglichen wird, das in einen Speicher (11) der Recheneinrichtung (2) gelegt wurde, um daraus die Lage abzuleiten, das heißt die Ausrichtung und die Lokalisierung der ersten Zielmarkierung (RPv1) in Bezug auf eine andere, mit der anderen Plattform (RPi) assoziierte Ausrichtungsmarkierung;
- Übertragen, an eine zweite Plattform (P2), der Lage der ersten Ausrichtungsmarkierung (RPv1) der Kameraeinrichtung (1) in Bezug auf die andere Markierung (RPi) sowie die Entfernung zwischen dem Ziel und der Kameraeinrichtung (1) der ersten Plattform (P1) oder nur die Koordinaten des Ziels in der Ausrichtungsmarkierung (RPi) der anderen Plattform (Pi).

2. - Zielvermittlungsverfahren nach Anspruch 1, wobei es bei dem Verfahren mindestens zwei Plattformen gibt, die in gegenseitiger Sichtverbindung sind, wobei eine erste Plattform (P1) eine erste Ausrichtungsmarkierung (RPv1) ihrer Kameraeinrichtung (1) und eine zweite Plattform (P2) eine zweite Plattformmarkierung (RP2) aufweist,
- die erste Plattform (P1) die Lage ihrer ersten Ausrichtungsmarkierung (RPv1) der Kameraeinrichtung (1) in der zweiten Plattformmarkierung (RP2) berechnet;
- die erste Plattform (P1) an die zweite Plattform (P2) und über die Kommunikationseinrichtungen (3) die somit berechnete Lage sowie die Entfernung zwischen dem Ziel und der Kameraeinrichtung (1) der ersten Plattform (P1) oder nur die Koordinaten des Ziels in der Ausrichtungsmarkierung (RP2) der zweiten Plattform (P2) überträgt.

3. - Zielvermittlungsverfahren nach Anspruch 1, wobei es bei dem Verfahren mindestens drei Plattformen gibt, die sich mindestens paarweise in Sichtverbindung sind, und wobei:
- von den Plattformen eine sogenannte Referenzplattform (PR) ausgewählt wird, die auf dem Gelände in dem Sichtfeld der Kameraeinrichtung (1) von mindestens zwei anderen Plattformen (P1, P2) positioniert ist;
- die Referenzplattform (PR) mittels der Kameraeinrichtung (1) der anderen Plattformen (P1, P2) beobachtet wird;
- die Geometrie der somit beobachteten Referenzplattform (PR) mit einem digitalen Modell dieser Plattform verglichen wird, das in einem Speicher (11) der Recheneinrichtung (2) jeder anderen Plattform (P1, P2) abgelegt wurde, um daraus auf der Ebene jeder Plattform (P1, P2) die Lage, das heißt die Ausrichtung und die Lokalisierung einer Ausrichtungsmarkierung der Kameraeinrichtung, die mit der beobachtenden Plattform (RPv1, RPv2) assoziiert ist, in Bezug auf eine Master-Markierung (RM), der mit der Referenzplattform (PR) assoziiert ist, abzuleiten;
- die erste Plattform (P1) an die zweite Plattform (P2) und über die Kommunikationseinrichtungen (3) die Lage der ersten Ausrichtungsmarkierung (RPv1) der Kameraeinrichtung (1) der ersten Plattform (P1) in der Master-Markierung (RM) sowie die Entfernung zwischen dem Ziel und der Kameraeinrichtung (1) der ersten Plattform (P1) oder nur die Koordinaten des Ziels in der Master-Markierung (RM) überträgt.

4. - Zielvermittlungsverfahren nach einem der Ansprüche 1 bis 3, wobei bei dem Verfahren die Kameraeinrichtung (1) fest mit einer Platine (7) verbunden ist, die in der Peilung starr mit dem Panoramasucher (5) verbunden ist, die Peilungsausrichtung des Suchers (5) somit die Verfolgung dieser Ausrichtung durch die Kameraeinrichtung (1) nach sich zieht, wobei die Kameraeinrichtung (1) an sich drehbar in der Höhe in Bezug auf die Platine (7) montiert ist, wobei das Schwenken in der Höhe durch eine Motorisierung (9) gesteuert wird, die eine automatische Kopie der Ausrichtung in der Höhe des Suchers (5) gewährleistet, wobei das von der Kameraeinrichtung (1) beobachtete Ziel das von dem Panoramasucher (5) bezeichnete Ziel ist und die Entfernung zwischen dem Ziel und der Kameraeinrichtung (1) von der Recheneinrichtung (2) ausgehend von den von dem Panoramasucher (5) gegebenen Bezeichnungsinformationen bereitgestellt wird.

5. - Zielvermittlungsverfahren nach Anspruch 4, wobei bei dem Verfahren die erste Plattform (P1) an die zweite Plattform (P2) und über die Kommunikationseinrichtungen (3) die Lage ihrer ersten Ausrichtungsmarkierung (RPv1) der Kameraeinrichtung (1) in die Ausrichtungsmarkierung der zweiten Plattform (RP2) oder in die Master-Markierung (RM) sowie die Entfernung zwischen dem Ziel und der Kameraeinrichtung (1) der ersten Plattform (P1) überträgt.

6. - Ausrichtungs- und Bezeichnungsvorrichtung eines Ziels durch eine erste Plattform (P1), wobei die Vorrichtung Einrichtungen umfasst, die zum Durchführen des Verfahrens einem der vorherigen Ansprüche angepasst sind, und **dadurch gekennzeichnet ist, dass** sie Folgendes umfasst:
- einen Panoramasucher (5), der um eine Ausrichtungsachse in Peilung schwenkbar ist, wobei der Sucher mit einer Zielbezeichnungsfunktion ausgestattet ist,
- eine Kameraeinrichtung (1), die mit einer Recheneinrichtung (2) gekoppelt ist, die mit Kommunikationseinrichtungen (3) verbunden ist, wobei die Kameraeinrichtung (1) ferner eine Beobachtung des Raums mit einer Winkelabdeckung von im Wesentlichen 360° um die Plattform herum gewährleistet;
- wobei die Recheneinrichtung (2) einen Speicher (11) integriert, in den ein digitales Modell von mindestens einer weiteren Plattform (Pi) platziert ist, die auf dem Gelände in dem Sichtfeld der Kameraeinrichtung (1) der ersten Plattform (P1) positioniert ist;
- wobei die Recheneinrichtung (2) Algorithmen integriert, die angepasst sind, um die Lage, das heißt die Ausrichtung und die Lokalisierung, in Bezug auf eine Markierung (Ri), die mit der anderen Plattform (Pi) assoziiert ist, einer ersten Ausrichtungsmarkierung (RPv1) der Kameraeinrichtung (1) der ersten Plattform (P1) im Raum zu bestimmen, die als erste Plattform-Zielmarkierung (RPv1) bezeichnet wird;
- die Kommunikationseinrichtungen (3) angepasst sind, um an eine zweite Plattform (P2) die Lage der ersten Ausrichtungsmarke (RPv1) der Kameraeinrichtung (1) in Bezug auf die andere Marke (RPi) sowie den Abstand zwischen dem Ziel und der Kameraeinrichtung der ersten Plattform (P1) oder nur die Koordinaten des Ziels in der Ausrichtungsmarke (RPi) der anderen Plattform (Pi) zu übertragen.

7. - Ausrichtungs- und Bezeichnungsvorrichtung eines Ziels nach Anspruch 6, **dadurch gekennzeichnet, dass** eine zweite Plattform (P2) die andere Plattform (Pi) bildet, wobei die Lage der ersten Ausrichtungsmarkierung (RPv1) der Kameraeinrichtung (1) in der Ausrichtungsmarkierung der zweiten Plattform (RP2) bestimmt wird, bevor sie an die zweite Plattform (P2) übertragen wird.

8. - Ausrichtungs- und Bezeichnungsvorrichtung eines Ziels nach Anspruch 6, **dadurch gekennzeichnet, dass** die andere Plattform (Pi) eine Referenzplattform (PR) ist, die sich sowohl mit der ersten Plattform (P1) als auch mit einer zweiten Plattform (P2) in Sichtverbindung befindet, wobei die Lage der ersten Ausrichtungsmarkierung (RPv1) der Kameraeinrichtung (1) in einer mit der Referenzplattform (PR) verbundenen Master-Markierung (RM) bestimmt wird, bevor sie an die zweite Plattform (P2) übertragen wird.

9. - Ausrichtungs-- und Bezeichnungsvorrichtung eines Ziels nach einem der Ansprüche 6 bis 8, **dadurch gekennzeichnet, dass** das digitale Modell mindestens einer weiteren, auf dem Gelände positionierten Plattform (Pi) ein Gelenkmodell ist, das die digitalen Modelle von mindestens zwei Teileinheiten der weiteren Plattform (Pi) miteinander verbindet, wobei jede Teileinheit in Bezug auf die andere Teileinheit räumlich ausgerichtet werden kann und die relative Ausrichtung der verschiedenen Teileinheiten von der weiteren Plattform (Pi) auf die Plattform (P1) übertragen wird.

10. - Ausrichtungs- und Bezeichnungsvorrichtung eines Ziels nach einem der Ansprüche 6 bis 9, **dadurch gekennzeichnet, dass** die Kameraeinrichtung (1) fest mit einer Platine (7) verbunden ist, die in der Peilung starr mit dem Panoramasucher (5) verbunden ist, die Peilungsausrichtung des Suchers (5) somit die Verfolgung dieser Ausrichtung durch die Kameraeinrichtung (1) nach sich zieht, wobei die Kameraeinrichtung (1) an sich drehbar in der Höhe in Bezug auf die Platine (7) montiert ist, wobei das Schwenken in der Höhe durch eine Motorisierung (9) gesteuert wird, die eine automatische Kopie der Ausrichtung in der Höhe des Suchers (5) gewährleistet, wobei der Sucher (5) mit der Recheneinrichtung (2) gekoppelt ist.

11. - Ausrichtungs- und Bezeichnungsvorrichtung eines Ziels nach Anspruch 10, **dadurch gekennzeichnet, dass** die erste Plattform (P1) an die zweite Plattform (P2) und über die Kommunikationseinrichtungen die Lage ihrer ersten Ausrichtungsmarkierung (RPv1) der Kameraeinrichtung (1) in die Ausrichtungsmarkierung der zweiten Plattform (RP2) oder in die Master-Markierung (RM) sowie die Entfernung zwischen dem Ziel und der Kameraeinrichtung (1) der ersten Plattform (P1) überträgt.

## Claims

1. - A method for inter-designation of targets between a first platform (P1) and at least one other platform (Pi), the method wherein at least one platform includes a panoramic sight (5) rotating around a pointing axis, the sight having a target designator function, and also includes camera means (1) coupled to computing means (2) associated with communication means (3), the camera means (1) ensuring an observation of the space with an angular coverage of substantially 360° around the platform (P1, Pi), the method wherein a first coordinate system (RPv1) of orientation of the camera means (1) of the first platform (P1) in space is defined, designated first platform sight coordinate system (RPv1), the method wherein:
- another platform (Pi) is observed using the camera means (1) ;
- the geometry of the other platform (Pi) thus observed, which has been incorporated in a snapshot digital model of this platform obtained from the observed image, is compared to a three dimensional digital model of this platform, which has been put in a memory (11) of the computing means (2), so as to deduce the pose, in other words, the orientation and the location of the first sight coordinate system (RPv1) relative to another orientation coordinate system associated with the other platform (RPi);
- the pose of the first coordinate system (RPv1) of orientation of the camera means (1) relative to the other coordinate system (RPi) as well as the distance between the target and the camera means (1) of the first platform (P1) or only the coordinates of the target in the orientation coordinate system (RPi) of the other platform (Pi) are transmitted to a second platform (P2) .

2. - The method for inter-designation of targets according to claim 1, the method wherein there are at least two platforms in intervisibility, a first platform (P1) having a first coordinate system (RPv1) of orientation of its camera means (1) and a second platform (P2) having a second platform coordinate system (RP2),
- the first platform (P1) calculates the pose of its first coordinate system (RPv1) of orientation of the camera means (1) in the second platform coordinate system (RP2);
- the first platform (P1) transmits to the second platform (P2) and by the communication means (3) the pose thus calculated as well as the distance between the target and the camera means (1) of the first platform (P1) or only the coordinates of the target in the orientation coordinate system (RP2) of the second platform (P2).

3. - The method for inter-designation of targets according to claim 1, the method wherein there are at least three platforms in at least two by two intervisibility, and wherein:
- a platform, designated reference platform (PR) is chosen from among the platforms, which is positioned on the ground in the field of view of the camera means (1) of at least two other platforms (P1, P2);
- the reference platform (PR) is observed using the camera means (1) of the other platforms (P1, P2);
- the geometry of the reference platform (PR) thus observed is compared to a digital model of this platform, which has been put in a memory (11) of the computing means (2) of each other platform (P1, P2), to deduce at each platform (P1, P2) the pose, in other words, the orientation and the location of an orientation coordinate system of the camera means associated with the observing platform (RPv1, RPv2), relative to a master coordinate system (RM) associated with the reference platform (PR) ;
- the first platform (P1) transmits to the second platform (P2) and by the communication means (3) the pose of the first coordinate system (RPv1) of orientation of the camera means (1) of the first platform (P1) in the master coordinate system (RM) as well as the distance between the target and the camera means (1) of the first platform (P1) or only the coordinates of the target in the master coordinate system (RM).

4. - The method for inter-designation of targets according to one of the claims 1 to 3, the method wherein the camera means (1) is integral with a plate (7) which is rigidly linked in azimuth to the panoramic sight (5), the azimuth pointing of the sight (5) therefore causing the tracking of this pointing by the camera means (1), the camera means (1) itself being mounted pivotable in elevation relative to the plate (7), the pivoting in elevation being controlled by a motorization (9) which ensures an automatic copy of the elevation pointing of the sight (5), the target observed by the camera means (1) being the target designated by the panoramic sight (5) and the distance between the target and the camera means (1) being provided by the computing means (2) from the designation information given by the panoramic sight (5).

5. - The method for inter-designation of targets according to claim 4, the method wherein, the first platform (P1) transmits to the second platform (P2) and by the communication means (3) the pose of its first coordinate system (RPv1) of orientation of the camera means (1) in the orientation coordinate system of the second platform (RP2) or in the master coordinate system (RM) as well as the distance between the target and the camera means (1) of the first platform (P1).

6. - A device for pointing and designating a target by a first platform (P1), the device comprising means for the implementation of the method according to one of the preceding claims and **characterized in that** it includes:
- a panoramic sight (5) pivotable around an azimuth pointing axis, the sight having a target designator function,
- camera means (1) coupled to computing means (2) associated with communication means (3), the camera means (1) further ensuring an observation of the space with an angular coverage of substantially 360° around the platform;
- the computing means (2) incorporating a memory (11) wherein is implemented a digital model of at least one other platform (Pi) which is positioned on the ground, in the field of view of the camera means (1) of the first platform (P1);
- the computing means (2) incorporating algorithms able to determine the pose, in other words, the orientation and the location, relative to a coordinate system (Ri) associated with the other platform (Pi), of a first coordinate system (RPv1) of orientation of the camera means (1) of the first platform (P1) in space, designated first platform sight coordinate system (RPv1);
- the communication means (3) being able to transmit to a second platform (P2) the pose of the first coordinate system (RPv1) of orientation of the camera means (1) relative to the other coordinate system (RPi) as well as the distance between the target and the camera means of the first platform (P1), or only the coordinates of the target in the orientation coordinate system (RPi) of the other platform (Pi).

7. - The device for pointing and designating a target according to claim 6, **characterized in that** a second platform (P2) constitutes the other platform (Pi), the pose of the first coordinate system (RPv1) of orientation of the camera means (1) being determined in the orientation coordinate system of the second platform (RP2) before being transmitted to the second platform (P2).

8. - The device for pointing and designating a target according to claim 6, **characterized in that** the other platform (Pi) is a reference platform (PR) which is in intervisibility both with the first platform (P1) and with a second platform (P2), the pose of the first coordinate system (RPv1) of orientation of the camera means (1) being determined in a master coordinate system (RM) associated with the reference platform (PR) before being transmitted to the second platform (P2).

9. - The device for pointing and designating a target according to one of claims 6 to 8, **characterized in that** the digital model of at least one other platform (Pi) positioned on the ground is an articulated model associating the digital models of at least two sub-assemblies of the other platform (Pi), each sub-assembly being able to be oriented in space relative to the other sub-assembly, the relative orientation of the different sub-assemblies being transmitted to the platform (P1) by the other platform (Pi).

10. - The device for pointing and designating a target according to one of claims 6 to 9, **characterized in that** the camera means (1) is integral with a plate (7) which is rigidly linked in azimuth to the panoramic sight (5), the azimuth pointing of the sight (5) therefore causing the tracking of this pointing by the camera means (1), the camera means (1) itself being mounted pivotable in elevation relative to the plate (7), the pivoting in elevation being controlled by a motorization (9) which ensures an automatic copy of the elevation pointing of the sight (5), the sight (5) being coupled to the computing means (2).

11. - The device for pointing and designating a target according to claim 10, **characterized in that** the first platform (P1) transmits to the second platform (P2) and by the communication means, the pose of its first coordinate system (RPv1) of orientation of the camera means (1) in the orientation coordinate system of the second platform (RP2) or in the master coordinate system (RM) as well as the distance between the target and the camera means (1) of the first platform (P1).
